# FASCICULE DE BREVET EUROPEEN

(11) **EP 2 834 104 B1**
(45) Date de publication et mention de la délivrance du brevet: **16.11.2016**
(21) Numéro de dépôt: 13719983.2
(22) Date de dépôt: 04.04.2013
(51) Int. Cl.: B60R 16/04, B62D 21/15

(54) **CHÂSSIS D'UN VÉHICULE AUTOMOBILE COMPRENANT DES MOYENS D'ABSORPTION D'UN CHOC FRONTAL**
KRAFTFAHRZEUGCHASSIS MIT MITTEL ZUR ABSORPTION EINES FRONTAUFPRALLS
CHASSIS OF A MOTOR VEHICLE INCLUDING A MEANS FOR ABSORBING A FRONTAL IMPACT

(30) Priorité: 05.04.2012 FR 1253157
(43) Date de publication de la demande: 11.02.2015
(73) Titulaire: Renault S.A.S., 92100 Boulogne-Billancourt (FR)
(72) Inventeur: DELORD, Christian, F-93320 Pavillons Sous Bois (FR); GAUMONT, Herve, F-78140 Velizy (FR); HLUBINA, Thierry, F-92372 Chaville (FR); CAILLARD, Jerome, F-91190 Gif Sur Yvette (FR)
(86) Numéro de dépôt international: PCT/FR2013/050744
(87) Numéro de publication internationale: WO 2013/150245

(56) Documents cités:
- FR-A1- 2 941 201
- FR-A1- 2 941 209
- US-A1- 2003 141 712
- US-A1- 2009 001 761
- US-A1- 2010 171 340

## Description

L'invention concerne la partie avant du châssis d'un véhicule automobile notamment d'un véhicule à propulsion électrique, et plus particulièrement la fixation d'un longeron avant.

Dans des solutions classiques de transfert d'effort de l'avant du véhicule vers l'arrière lors d'un choc frontal, la majorité des efforts sont transférés depuis un longeron avant vers un longeron central qui se situe dans son prolongement suivant l'axe longitudinal du châssis. Une moindre part des efforts est transférée latéralement par un bavolet latéral ou par un tunnel au centre du châssis.

Le brevet américain US 6,926,352 décrit un tel châssis de véhicule automobile comprenant deux longerons à l'avant du véhicule répartis de chaque côté, un tunnel central de plancher, et deux longerons centraux permettant de transférer à l'arrière du véhicule les efforts subis lors d'un choc frontal.

Le brevet américain US 7,810,878 décrit un châssis de véhicule automobile comprenant un pare-choc monté sur des longerons avant transmettant les efforts subis lors d'un choc frontal à la partie arrière d'un véhicule automobile via des longerons centraux passant sous le plancher central du véhicule automobile et des bavolets montés en périphérie du châssis.

Dans le cas d'un véhicule électrique, le plancher central est généralement surélevé afin de permettre de loger la batterie sous celui-ci. Le longeron central passant sous le plancher réduit alors l'espace de stockage disponible pour les batteries, principalement selon un axe transversal, c'est-à-dire dans une direction orthogonale à la direction avant-arrière du véhicule. Cette réduction de l'espace de stockage disponible est fortement préjudiciable pour la capacité de stockage des batteries et donc pour l'autonomie du véhicule automobile, notamment sur un véhicule compact.

Les documents US 2003/141712 A1 et FR 2 941 201 A1 décrivent un châssis de véhicule automobile muni de moyens d'absorption d'un choc frontal comprenant deux longerons montés sur une portion avant du châssis et disposés de chaque côté du châssis, une traverse avant montée sous le plancher de l'habitacle du véhicule en contact avec un tunnel de transmission disposé sur un axe central et s'étendant depuis la traverse avant vers une portion arrière du châssis, chaque longeron comprenant une extrémité montée en butée sur la traverse avant. Un tel châssis peut néanmoins être encore optimisé.

Les documents US 2009/0001761 et US 2010/0171340 , qui viennent d'être pris à base du préambule de la revendication 1, décrivent en outre un châssis de véhicule automobile montrant des moyens d'absorption de choc frontal avec deux équerres montées chacune entre un longeron et la traverse avant et présentant une extrémité en regard du tunnel de transmission et ayant la forme d'un flanc incliné en biais entre le longeron auquel il est couplé et la traverse avant.

L'invention se propose de fournir un châssis comprenant des moyens de transfert d'efforts permettant de libérer une zone d'espace disponible pour le stockage des batteries sous le plancher central du véhicule automobile sur toute sa largeur tout en assurant le transfert des efforts dus à un choc frontal de l'avant à l'arrière du véhicule.

L'invention vient d'être exposé au moyen des caractéristiques de la revendication 1. un aspect de l'invention, il est proposé dans un mode de réalisation, un châssis de véhicule automobile muni de moyens d'absorption d'un choc frontal comprenant deux longerons montés sur une portion avant du châssis et disposés de chaque côté du châssis, une traverse avant montée sous le plancher de l'habitacle du véhicule en contact avec un tunnel de transmission disposé sur un axe central et s'étendant depuis la traverse avant vers une portion arrière du châssis.

Selon une caractéristique générale, chaque longeron comprend une extrémité montée en butée sur la traverse avant, le châssis comprenant ainsi un espace sous le plancher exempt de longerons centraux.

La traverse avant montée sur les longerons de la portion avant du châssis permet de faire un lien entre les longerons et le tunnel de transmission du véhicule automobile. Ce lien permet de transférer au moins une partie des forces dues au choc frontal vers le tunnel de transmission et de libérer l'espace sous le plancher pour le stockage de batteries.

La traverse avant permet également de fournir un support de fixation de la batterie.

En outre, la traverse avant permet une bonne protection de la batterie en cas de choc latéral de par la position de la traverse par rapport à la batterie.

Avantageusement, les moyens d'absorption du choc frontal peuvent comprendre en outre deux équerres montées chacune entre un longeron et la traverse avant, chaque équerre étant dimensionnée de manière à présenter une extrémité à hauteur du tunnel de transmission et ayant une forme avec un flan incliné en biais entre le longeron avant auquel elle est couplée et la traverse avant.

Les équerres permettent, d'une part, de contribuer à la rigidité du châssis, d'autre part, d'optimiser la transmission des efforts dus au choc frontal vers le tunnel de transmission, et enfin, de limiter la rotation autour d'un axe vertical du longeron.

De préférence, le châssis comprend deux bavolets montés de chaque côté du châssis, et les moyens d'absorption du choc frontal comprennent en outre deux traverses latérales montées chacune entre un longeron et un bavolet, à hauteur de la traverse avant.

La fixation de la traverse latérale entre un longeron et un bavolet permet de contribuer à la rigidité du châssis, d'une part, et de transmettre une partie des efforts dus à un choc frontal à un bavolet pour que ces efforts soient transmis et dissipés vers l'arrière du châssis.

Il est ainsi possible de constituer un châssis de véhicule automobile exempt de longerons centraux, capable de transmettre les efforts subis au tunnel et aux bavolets. Cela permet en outre d'augmenter l'espace disponible sous le plancher central et donc d'utiliser tout l'espace sous le plancher pour le stockage des batteries et ainsi augmenter les capacités du véhicule automobile à traction électrique, dont l'autonomie.

Préférentiellement, chaque traverse latérale possède une forme inclinée vers l'arrière du côté du bavolet de manière à former un angle obtus entre le longeron et l'inclinaison de la traverse latérale.

La forme inclinée du flan de la traverse latérale permet de favoriser le transit des efforts vers l'arrière.

Avantageusement, la traverse avant, les longerons et les équerres peuvent être assemblés à l'aide de points de soudure.

D'autres avantages et caractéristiques de l'invention apparaîtront à l'examen de la description détaillée d'un mode de réalisation, nullement limitatif, et des dessins annexés, sur lesquels :
- la figure 1 illustre schématiquement une vue de dessus d'un châssis d'un véhicule automobile selon un mode de réalisation ;
- la figure 2 présente une vue en perspective de dessous d'une portion avant du châssis.

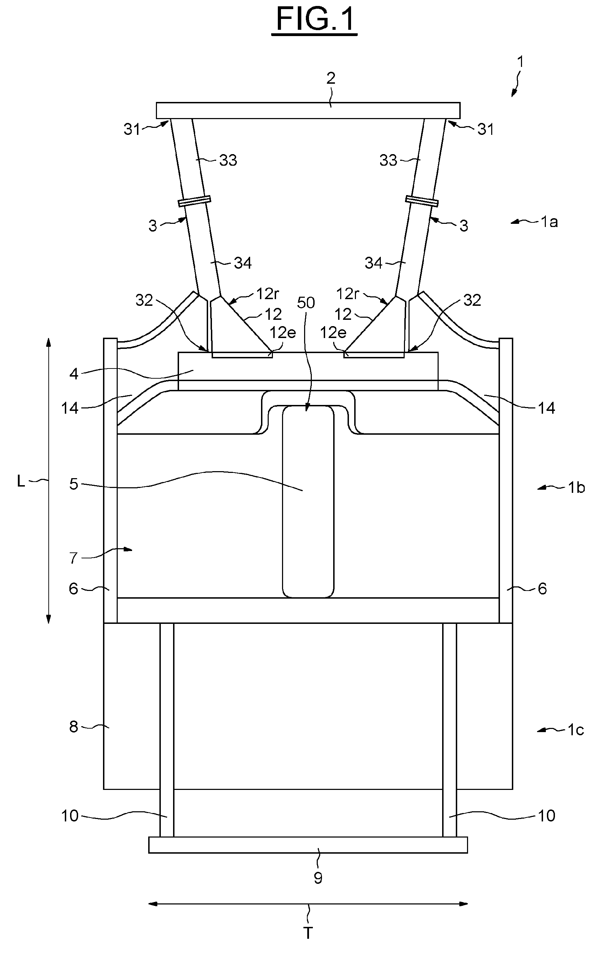

Sur la figure 1 est représenté de manière schématique une vue de dessus d'un châssis 1 de véhicule automobile selon un mode de réalisation de l'invention.

Le châssis 1 comprend une portion avant 1a comportant entre autre un pare-choc avant 2, des longerons 3 et une traverse avant 4, une portion centrale 1b comportant entre autre un tunnel de transmission 5, des bavolets 6 et un plancher central 7, et une portion arrière 1c comportant notamment un plancher de coffre 8 et un pare-choc arrière 9 couplés à des longerons arrière 10.

Dans la portion avant 1a du châssis 1, le pare-choc avant 2 s'étend dans une direction transverse T, c'est-à-dire orthogonale à la direction avant/arrière du châssis 1, et est assemblé avec deux longerons 3 s'étendant dans une direction longitudinale L, parallèle à la direction avant/arrière du châssis.

Chaque longeron 3 comprend une première extrémité 31 à laquelle est fixé le pare-choc 2 et une seconde extrémité 32 à laquelle est fixée la traverse avant 4 s'étendant dans la direction transverse T parallèlement au pare-choc 2. Les longerons 3 participent à la rigidité du châssis 1 et fournissent un support à des éléments moteurs et à des éléments de carrosserie du véhicule automobile. Ils sont également conçus pour participer à l'absorption d'énergie lors d'un choc frontal notamment. Ils permettent une transmission des efforts subis par le pare-choc avant 2 lors d'un choc frontal vers la portion arrière 1c du châssis 1 tout en absorbant une partie de l'énergie liées aux efforts.

Dans cet exemple, les longerons 3 sont réalisés en une partie avant 33 et une partie arrière 34 assemblées ensemble. Les longerons peuvent également être réalisés en une seule partie.

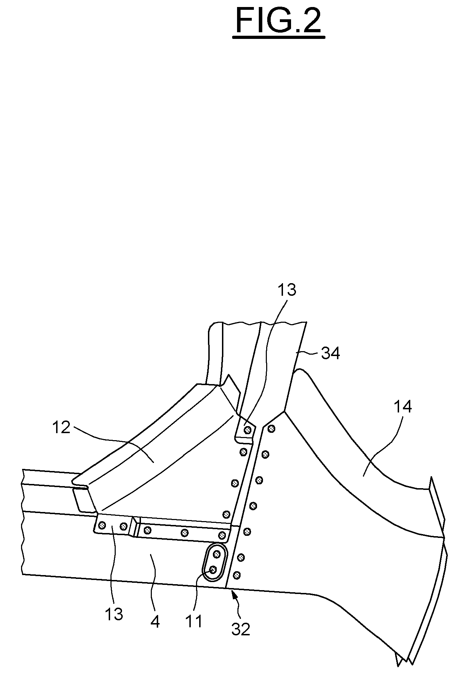

La seconde extrémité 32 de chaque longeron 3 repose en butée sur la traverse 4 comme cela est illustré sur la figure 2 qui présente une vue détaillée en perspective d'une partie de la portion avant 1a du châssis. La traverse avant 4 est un profilé possédant une section en forme de U orientée de manière à recevoir les longerons 3 dans le creux du profilé. Les longerons 3 ne s'étendent donc pas au-delà de la traverse avant 4. Ils sont fixés sur la traverse 4 par des points de soudure 11.

La portion avant 1a du châssis 1 comprend également deux équerres 12 comme cela est illustré sur les figures 1 et 2. Chaque équerre 12 est monté entre un longeron 3 et la traverse 4 de manière à rigidifier la structure du châssis 1 et à améliorer le taux de transfert d'énergie lors d'un choc frontal entre les longerons 3 et le tunnel de transmission 5 sur un axe longitudinal centré sur le châssis 1.

Chaque équerre 12 est assemblée avec un longeron 3 et la traverse avant 4 à l'aide de languettes 13 de fixation venant en appui sous la traverse avant 4 et sous le longeron 3. Les équerres 12 sont également fixées par des points de soudure 11 sur le longeron 3 et sur la traverse avant 4.

Chaque équerre 12 possède une face de renfort 12r (figure 1) oblique s'étendant entre le longeron 3 auquel elle est couplée et la traverse avant 4. Les équerres 12 sont dimensionnées de manière à ce que l'extrémité 12e de la face de renfort 12r soit disposée en regard de l'entrée 50 du tunnel de transmission 5. De cette façon, le taux d'énergie transmise vers le tunnel de transmission 5 lors d'un choc frontal est maximisé.

Le châssis 1 comprend également deux traverses latérales 14 s'étendant chacune entre un longeron 3 et un bavolet 6 s'étendant dans la direction longitudinale L en périphérie du châssis 1 entre la portion avant 1a et la portion centrale 1b. Chaque traverse latérale 14 est fixée à un longeron 3 à hauteur de la seconde extrémité 32 par des points de soudure 11.

Les traverses latérales 14 s'étendent entre le longeron 3 et le bavolet 6 selon une direction oblique de sorte que la portion de la traverse latérale 14 couplée au bavolet 6 est en arrière par rapport à la portion de la traverse latérale couplée au longeron 3. L'angle ainsi formé entre le longeron 3 et la traverse latérale est un angle obtus.

On obtient ainsi un longeron 3 couplé à une traverse avant 4 possédant deux éléments de transmission d'effort, l'équerre 12 et la traverse latérale 14, selon deux lignes de fuites s'écartant du longeron et orientées vers l'arrière du châssis 1.

La portion avant 1a du châssis 1 comprend ainsi des moyens d'absorption d'un choc frontal comprenant un pare-choc avant 2, des longerons 3 couplés, d'une part, à une traverse 4 avec des équerres 12, et couplés, d'autre part, à des traverses latérales 14 couplées à des bavolets 6.

L'énergie due à un choc frontal sur le pare-choc avant 2 est ainsi transmise à la portion arrière 1c du châssis 1, d'une part, via le tunnel de transmission 5 central passant sur le plancher central 7 et monté sur la traverse avant 4, et d'autre part, via les bavolets 6 s'étendant de chaque côté du châssis 1.

De tels moyens d'absorption d'un choc frontal permettent ainsi de conserver la zone sous le plancher central 7 entièrement libre pour le stockage des batteries, et ainsi d'augmenter l'autonomie possible par exemple d'un véhicule automobile à traction électrique étant donné le volume disponible sous le plancher central 7.

## Revendications

1. Châssis (1) de véhicule automobile muni de moyens d'absorption d'un choc frontal comprenant deux longerons (3) montés sur une portion avant (1a) du châssis (1) et disposés de chaque côté du châssis (1), une traverse avant (4) montée sous le plancher (7) de l'habitacle du véhicule en contact avec un tunnel de transmission (5) disposé sur un axe central et s'étendant depuis la traverse avant (4) vers une portion arrière (1c) du châssis (1), chaque longeron (3) comprenant une extrémité (32) montée en butée sur la traverse avant (4), les moyens d'absorption de choc frontal comprenant deux équerres (12) montées chacune entre un longeron (3) et la traverse avant (4), chaque équerre (12) étant dimensionnée de manière à présenter une extrémité (12e) en regard du tunnel de transmission (5) et ayant une forme avec un flan (12r) incliné en biais entre le longeron (3) auquel elle est couplée et la traverse avant (4), **caractérisé en ce qu'**il comprend deux bavolets (6) montés de chaque côté du châssis (1), dans lequel les moyens d'absorption du choc frontal comprennent en outre deux traverses latérales (14) montées chacune entre un longeron (3) et un bavolet (6), à hauteur de la traverse avant (4) et **en ce que** chaque traverse latérale (14) possède une forme inclinée vers l'arrière du côté du bavolet (6) de manière à former un angle obtus entre le longeron (3) et la traverse latérale (14).

2. Châssis (1) selon la revendication 1, dans lequel la traverse avant (4), les longerons (3) et les équerres (12) sont assemblés à l'aide de points de soudure (11).

## Patentansprüche

1. Kraftfahrzeugchassis (1) mit Mitteln zur Absorbierung eines Frontaufpralls, umfassend zwei Längsträger (3), die an einem vorderen Abschnitt (1a) des Chassis (1) montiert und an jeder Seite des Chassis (1) angeordnet sind, einen vorderen Querträger (4), der unter dem Boden (7) des Fahrzeuginnenraums in Kontakt mit einem Getriebetunnel (5) montiert ist, der auf einer mittleren Achse angeordnet ist und sich vom vorderen Querträger (4) zu einem hinteren Abschnitt (1c) des Chassis (1) erstreckt, wobei jeder Längsträger (3) ein Ende (32) umfasst, das an dem vorderen Querträger (4) anschlagend montiert ist, wobei die Frontalaufprallabsorbierungsmittel zwei Winkelstücke (12) umfassen, die jeweils zwischen einem Längsträger (3) und dem vorderen Querträger (4) montiert sind, wobei jedes Winkelstück (12) so bemessen ist, dass ein Ende (12e) dem Getriebetunnel (5) gegenüberliegt, und eine Form mit einer abgeschrägten Platte (12r) zwischen dem Längsträger (3), an den es gekoppelt ist, und dem vorderen Querträger (4) hat, **dadurch gekennzeichnet, dass** es zwei Schürzen (6) hat, die an jeder Seite des Chassis (1) montiert sind, wobei die Frontalaufprallabsorbierungsmittel ferner zwei seitliche Querträger (14) umfassen, die jeweils zwischen einem Längsträger (3) und einer Schürze (6) auf der Höhe des vorderen Querträgers (4) montiert sind, und dass jeder seitliche Querträger (14) eine an der Seite der Schürze (6) nach hinten geneigte Form besitzt, so dass ein stumpfer Winkel zwischen dem Längsträger (3) und dem seitlichen Querträger (14) gebildet ist.

2. Chassis (1) nach Anspruch 1, wobei der vordere Querträger (4), die Längsträger (3) und die Winkelstücke (12) mittels Punktverschweißungen (11) zusammengebaut sind.

## Claims

1. Motor vehicle chassis (1) provided with means for absorbing a frontal impact, comprising two longitudinal members (3) mounted on a front portion (1a) of the chassis (1) and arranged on each side of the chassis (1), a front crossmember (4) mounted below the floor (7) of the passenger compartment of the vehicle in contact with a transmission tunnel (5) arranged on a central axis and extending from the front crossmember (4) toward a rear portion (1c) of the chassis (1), each longitudinal member (3) comprising an end (32) mounted so as to butt against the front crossmember (4),
the means for absorbing a frontal impact comprising two brackets (12) each mounted between a longitudinal member (3) and the front crossmember (4), each bracket (12) being dimensioned so as to have an end (12e) facing the transmission tunnel (5) and having a shape with a flank (12r) inclined at an angle between the longitudinal member (3) to which it is coupled and the front crossmember (4), **characterized in that** it comprises two skirts (6) mounted on each side of the chassis (1), wherein the means for absorbing the frontal impact additionally comprise two lateral crossmembers (14) each mounted between a longitudinal member (3) and a skirt (6), at the height of the front crossmember (4) and **in that** each lateral crossmember (14) has a shape inclined toward the rear on the skirt (6) side so as to form an obtuse angle between the longitudinal member (3) and the lateral crossmember (14).

2. Chassis (1) according to Claim 1, in which the front crossmember (4), the longitudinal members (3) and the brackets (12) are assembled with the aid of spot welds (11).
